Europäisches Patentamt

European Patent Office

Office européen des brevets

(19)

(11) Veröffentlichungsnummer: **0 201 785**
**B1**

(12) **EUROPÄISCHE PATENTSCHRIFT**

(45) Veröffentlichungstag der Patentschrift: **04.04.90**

(21) Anmeldenummer: **86105758.6**

(22) Anmeldetag: **25.04.86**

(51) Int. Cl.$^5$: **A 01 B 49/06**

(54) Landwirtschaftliches Kombinationsgerät.

(30) Priorität: 07.05.85 EP 85105556
15.10.85 DE 8529225 u
14.11.85 DE 8532161 u

(43) Veröffentlichungstag der Anmeldung:
20.11.86 Patentblatt 86/47

(45) Bekanntmachung des Hinweises auf die
Patenterteilung:
04.04.90 Patentblatt 90/14

(84) Benannte Vertragsstaaten:
AT CH DE FR GB IT LI NL

(56) Entgegenhaltungen:
EP-A-0 033 950     FR-A-2 499 817
EP-A-0 039 792     GB-A-2 014 021
EP-A-0 093 193     GB-A-2 104 761
EP-A-0 129 614     US-A-1 765 176
DE-A-2 025 257     US-A-2 241 675
DE-A-3 143 408     US-A-2 663 241
DE-U-8 317 606     US-A-4 509 438
FR-A-2 389 310

(73) Patentinhaber: **Maschinenfabrik Rau GmbH**
**Johannes-Rau-Strasse**
**D-7315 Weilheim (DE)**

(72) Erfinder: **Rau, Willy**
**Beethovenstrasse 7**
**D-7312 Kirchheim (DE)**
Erfinder: **Taus, Christian**
**Galgenberg 19**
**D-7312 Kirchheim (DE)**

(74) Vertreter: **Dipl.-Phys.Dr. Manitz Dipl.-Ing.**
**Finsterwald Dipl.-Ing. Grämkow Dipl.-Chem.Dr.**
**Heyn Dipl.-Phys. Rotermund Morgan,**
**B.Sc.(Phys)**
**Seelbergstrasse 23/25**
**D-7000 Stuttgart 50 (DE)**

EP 0 201 785 B1

**Beschreibung**

Die Erfindung betrifft ein landwirtschaftliches Bodenbearbeitungsgerät mit einem den Boden auf- bzw. umbrechenden Zinkenrotor, welcher in die Fahrt des Gerätes unterstützender Laufrichtung antreibbar ist.

Ein derartiges Gerät wird beispielsweise in der GB-A 20 14 021 dargestellt. Dabei bestehen die Zinken im wesentlichen aus Stangenteilen, die jeweils in eine an der Rotorachse tangential angeordnete Aufnahmehülse zur Halterung eingesteckt sind. Die Zinken sind relativ eng zueinander angeordnet, indem jeweils zwei Zinken in einer Radialebene der Rotorachse untergebracht sind und in Achsrichtung des Rotors benachbarte Zinken bzw. die von denselben gebildeten Radialebenen nur einen Abstand voneinander haben, welcher etwa dem Durchmesser einer Aufnahmehülse entspricht.

Dieser bekannte Zinkenrotor ist wenig geeignet, auf Böden mit langsträhnigen Pflanzenresten eingesetzt zu werden, weil sich dieselben leicht am Rotor bzw. zwischen dessen Zinken verschlingen können.

Aus der US-A 26 63 241 ist eine Rotoregge bekannt, deren zinkenähnliche Werkzeuge mittels zur Rotorachse paralleler Schraubbolzen am Umfangsbereich von Kreisscheiben befestigt sind, die ihrerseits auf der Rotorachse angeordnet sind. Die Zinkenwerkzeuge bestehen jeweils aus einem in Radialrichtung des Rotors erstreckten Flachbandteil, dessen in Umlaufrichtung weisende Kante messerartig zugespitzt ist. Die freien Enden der Zinkenwerkzeuge sind meißel- bzw. scharblattartig ausgebildet, wobei die Zinkenwerkzeuge in Frontansicht T-Form haben.

Dieser bekannte Rotor ist für schwere Böden wenig geeignet, da bei derartigen Einsätzen die die Zinkenwerkzeuge halternden Schraubbolzen durch erhebliche und in der Regel zerstörerische Scherkräfte beansprucht würden.

Die US-A-22 41 675 zeigt eine Rotoregge, die vor allem auf Spargelfeldern und damit auf sehr leichten Böden eingesetzt soll. Für schwerere Böden ist diese Rotoregge schon deshalb nicht geeignet, weil die Zinkenwerkzeuge jeweils an Kreisscheiben angeordnet sind, die an der Rotorachse jeweils mittels Muffen kraftschlüssig verspannt sind, welche von der Rotorachse durchsetzt werden. Im übrigen sind an jeder Kreisscheibe mehrere, beispielsweise sechs Zinkenwerkzeuge angeordnet, so daß bei Böden, auf denen langsträhnige Pflanzenreste liegen, damit gerechnet werden muß, daß der Zinkenrotor durch sich verschlingende Pflanzenreste zugesetzt wird.

In der EP-A-00 33 950 wird ein Kombinationsgerät mit Zinkenrotor beschrieben, bei dem die Zinken auswechselbar in Muffen. gehaltert sind, die ihrerseits mit Laschen an der Rotorwelle befestigt sind. Die Zinken besitzen ein quadratisches Profil, wobei sie so in die Muffen eingesetzt sind, daß sie mit einer Kante, welche eine keilförmige Schlagkante bildet, in die Umlaufrichtung weisen. Dabei sind die die Zinken halternden Muffen bevorzugt derart angeordnet, daß die Rotorachse, in Umlaufrichtung der Zinken gesehen, vor der Schlagkante verläuft.

Bei diesem bekannten Zinkenrotor ist bereits vorgesehen, relativ wenig Zinken anzuordnen und den Zinkenrotor im Hinblick auf ein gutes Arbeitsergebnis mit entsprechend hoher Umlaufgeschwindigkeit arbeiten zu lassen.

Aufgabe der Erfindung ist es nun, die Belastbarkeit des Zinkenrotors sowie dessen Wirkung bei der Arbeit im Hinblick auf den Einsatz auf schweren oder harten Böden noch weiter zu verbessern.

Diese Aufgabe wird bei einem Bodenbearbeitungsgerät der eingangs angegebenen Art dadurch gelöst, daß die Zinken jeweils fest an der Rotorachse bzw. -nabe angeordnete Haltearme sowie darin austauschbar gehaltene, die Bodenarbeit ausführende Zinkenstücke besitzen, die mit den Haltearmen jeweils einen in Umlaufrichtung geöffneten Winkel bilden, wobei die Zinkenstücke mit einem verjüngten Teilstück in eine hülsenförmige Aufnahme am Haltearm eingesetzt und auf der von der Rotorachse bzw. -nabe abgewandten Seite ihres an das verjüngte Teilstück anschließenden dickeren Bereiches, welcher einen Querschnitt mit in Umlaufrichtung des Zinkenrotors weisender Kante aufweist, von einem am Haltearm im Anschluß an die hülsenförmige Aufnahme angeordneten, wulstartig verstärkten Rand abgestützt sind, und daß an den freien Enden der Zinkenstücke Schneidblätter angeordnet sind, welche - in Achsansicht des Zinkenrotors gesehen - mit einer das freie Ende tangential zur Rotorachse durchsetzenden Linie einen Winkel bilden, derart, daß die Schneidblätter beim Rotorumlauf erfaßte Erde anzuheben suchen (Anschnittwirkung).

Durch die Schneidblätter wird die Breitenwirkung jeder Zinke erhöht, wobei aufgrund der Anschnittwirkung eine gute Lockerung des Bodens erreicht und vermieden wird, daß der Zinkenrotor beim Umlauf auf dem Untergrund eine verfestigende Wirkung, etwa im Bereich des Arbeitshorizontes, haben kann. Aufgrund der Schar- bzw. Schneidblätter genügt es, den Rotor mit geringer Zinkenzahl anzuordnen, gleichwohl vermag der Rotor die Erde wirksam durchzuarbeiten.

Beispielsweise genügt es gemäß einer bevorzugten Ausführungsform der Erfindung, in Achsrichtung des Rotors aufeinanderfolgende Zinken mit großem Abstand, d.h. mit großem sogenannten Strichabstand, und darüber hinaus jede Zinke in einer separaten Radialebene des Zinkenrotors anzuordnen.

Im übrigen wird durch die erfindungsgemäße Ausbildung der Zinken, insbesondere durch die angegebene Halterung der Zinkenstücke in den Haltearmen, eine hohe Stabilität der Zinken erreicht, so daß der Rotor mit hoher Umlaufgeschwindigkeit arbeiten kann. Die hohe Umlaufgeschwindigkeit trägt ebenfalls dazu bei, daß die Anordnung relativ weniger Zinken genügt, denn bei hinreichender Umlaufgeschwindigkeit braucht der Rotor nur mit jeweils einer einzigen Zinke in vergleichsweise weit voneinander beabstandeten Radialebenen der Rotorachse bestückt zu werden.

Aufgrund der hohen Umlaufgeschwindigkeit und der geringen Zinkenzahl kann sich langsträhniges Pflanzengut nicht am Zinkenrotor festsetzen, vielmehr wird es wirksam zerrissen. Gleichzeitig wird der Boden aufgrund der relativ hohen Umlaufgeschwindigkeit auch seitlich der Zinken wirksam durchgearbeitet, und zwar ohne daß die Gefahr eines vollständigen Abschälens der bearbeiteten Bodenschicht vom Untergrund besteht. Vielmehr bleibt eine im Hinblick auf Erosionsgefahren erwünschte Bindung zwischen dem Untergrund und der vom Rotor bearbeiteten Bodenschicht vorhanden.

Der Haltearm der Zinken ist beispielsweise derart angeordnet, daß ein jeweils von der Rotorachse zum freien Ende des Zinkenstückes verlaufender Radialstrahl den Verbindungsbereich zwischen Rotorachse bzw. -nabe und Haltearm etwa in der Mitte durchsetzt. Darüber hinaus erstreckt sich der Verbindungsbereich zwischen Rotorachse und Haltearm im Hinblick auf eine hohe Belastbarkeit bevorzugt über etwa 1/4 des Achsumfanges.

Das Zinkenendstück ist bevorzugt mit seiner zwischen dem verjüngten Teil und dem dickeren Bereich gebildeten Stufe gegen das zugewandte Stirnende der hülsenförmigen Aufnahme spannbar, indem ein Muttern- bzw. Schraubteil, welches an bzw. auf dem mit entsprechendem Gewinde versehenen freien Ende des verjüngten Teilstückes angeordnet ist, gegen das andere Stirnende der Aufnahme spannbar ist. Bei dieser Anordnung ist das Schraub- bzw. Mutternteil gut zugänglich, so daß ein Austausch der Zinkenstücke in einfachster Weise möglich ist. Darüber hinaus wird eine besonders hohe Belastbarkeit der Zinkenstücke gewährleistet, weil durch die axiale Verspannung von Zinkenstück und hülsenförmiger Aufnahme eine gute Abstützung der Stufe zwischen dem verjüngten Teilstück und dem dickeren Bereich des Zinkenstückes auf der zugewandten Randfläche der hülsenförmigen Aufnahme und damit auch eine besonders gute Abstützung des dickeren Bereiches auf der Aufnahme erreicht werden. Kräfte, die bei der Bodenarbeit quer zur Achse des Zinkenstückes auf dasselbe einwirken, erzeugen dementsprechend teilweise Reaktionskräfte innerhalb des Hülsenmantels parallel zu dessen Achse.

Bei einer besonders bevorzugten Ausführung der Erfindung besitzt das Bodenbearbeitungsgerät eine hinter dem Zinkenrotor arbeitende Packer- und Krümlerwalze, welche mit in Radialebenen der Walze angeordneten Zahnreihen in den Boden eindringt; außerdem kann eine Saatgut-Austragsvorrichtung angeordnet sein, die vor der Packer- und Krümlerwalze angeordnete Saatauslaufrohre besitzt. Dabei wird eine Ausführungsform bevorzugt, bei der die Saatauslaufrohre jeweils in den Abstandsraum zwischen benachbarten Zahnreihen mündend und die Packer- und Krümlerwalze dicht hinter dem Zinkenrotor als Prallfläche im Erdstrom angeordnet bzw. anbringbar sind, welcher vom Zinkenrotor bei der Bodenarbeit erzeugt wird.

Diese Anordnung beruht auf dem allgemeinen Gedanken, die Saatauslaufrohre dicht vor der Krümlerwalze anzuordnen, um das Saatgut in bzw. unter den vom Zinkenrotor hervorgerufenen, bewegten Erdstrom einzubringen. Dabei wird durch die Ausnutzung des Abstandsraumes zwischen den Zahnreihen der Packer- und Krümlerwalze für die Unterbringung der Saatauslaufrohre eine besonders raumsparende Bauweise erzielt, bei der die Packer- und Krümlerwalze praktisch unmittelbar hinter dem Zinkenrotor als rotierende Prallfläche für den aufgeworfenen Erdstrom angeordnet werden kann. Dadurch wird erreicht, daß der Erdstrom gegebenenfalls an der Packer- und Krümlerwalze anhaftende Erde ablöst. Gleichzeitig wird verhindert, daß sich an den Saatauslaufrohren Erde oder langsträhniges Pflanzengut festsetzen kann. Letzteres wird darüber hinaus auch noch durch die auf beiden Seiten jedes Saatauslaufrohres vorbeilaufenden Zahnreihen der Packer- und Krümlerwalze entfernt, und zwar besonders wirksam, wenn die Außenenden der Zähne in Achsansicht der Walze über die Auslaufmündungen bzw. die Endstücke der Saatauslaufrohre in Radialrichtung bezüglich der Walzenachse hinausragen.

Dieses Kombinationsgerät kann also auch auf solchen Flächen störungsfrei arbeiten, auf denen langsträhniges Pflanzengut nach der Ernte zurückgelassen wurde, um mit der Verrottung dieses Gutes einhergehende Humusbildung nutzen zu können.

Aufgrund seiner besonders kurzen Baulänge kann das erfindungsgemäße Kombinationsgerät auch von relativ leichten Zugfahrzeugen in angehobener Lage transportiert werden, ohne daß die Vorderachse des Zugfahrzeuges übermäßig entlastet würde.

Grundsätzlich können vor der Packer- und Krümlerwalze verschiedenartige auf- bzw. umbrechende Werkzeuge angeordnet werden, d.h. grundsätzlich können auch Zinkenrotoren verwendet werden, deren Bauart von der oben beschriebenen Bauart abweicht.

Im Hinblick auf konstruktive Einfachheit und gutes Arbeitsergebnis sind jedoch solche Zinkenrotoren bevorzugt, welche in die Fahrt des Gerätes unterstützender Laufrichtung antreibbar und aufgrund hinreichender Umlaufgeschwindigkeit nur mit wenigen Zinken bestückt sind.

Die Packer- und Krümlerwalze besitzt bevorzugt einen im wesentlichen geschlossenen kreiszylindrischen Mantel mit darauf angeschweißten Zahnreihen. Bei dieser Bauform bleibt auch auf nassen Böden nur vergleichsweise wenig Erde am Walzenumfang hängen. Darüber hinaus können zwischen den Zahnreihen in besonders einfacher Weise auf der von den Saatauslaufrohren abgewandten Walzenseite Abstreifer angeordnet sein, welche mit geringem Bodenabstand unterhalb einer die Walzenachse durchsetzenden bodenparallelen Ebene an der Walze anliegen sollten. Bei dieser Anordnung wird die bei der Bodenarbeit gegebenenfalls haftenbleibende Erdschicht unmittelbar hinter der Berührungszone zwischen Boden und Walze abgestreift. Dementsprechend kann die aus geringer Höhe herabfallende Erde das vom Kombinationsgerät hinterlassene Arbeitsergebnis praktisch nicht beeinträchtigen.

Weitere bevorzugte Ausführungsformen der Erfindung sind Gegenstand der Unteransprüche und werden darüber hinaus nachfolgend anhand der Zeichnung erläutert. Dabei zeigen

Fig. 1 eine Frontansicht des erfindungsgemäßen Kombinationsgerätes,

Fig. 2 eine Seitenansicht desselben,

Fig. 3 und 4 ausschnittsweise Seitenansichten des Kombinationsgerätes mit hydraulisch hochklappbaren Säscharen hinter der Krümlerwalze,

Fig. 5 eine weitere geschnittene Seitenansicht der Krümlerwalze mit Abstreifern sowie Saataustragsvorrichtungen vor und hinter der Walze und.

Fig. 6 bis 11 verschiedene Ansichten und Formen der Rotorzinken.

Das erfindungsgemäße Kombinationsgerät ist im wesentlichen mit einem Zinkenrotor 10, vor dem im Bereich der Spuren eines Zugfahrzeuges Scharwerkzeuge angeordnet sein können, einer Packer- und Krümlerwalze 20 sowie einer Saatgut-Austragsvorrichtung 30 mit Saatauslaufrohren 31 ausgerüstet.

Der Zinkenrotor 10 besitzt einen Rahmen, welcher im wesentlichen durch einen Querbalken 1 sowie an dessen Enden angeordneten Seitenteilen 3 besteht, an denen der Zinkenrotor 10 gelagert ist. Der Querbalken 1 besteht seinerseits aus zwei Balkenteilen 1' und 1'', die beiderseits eines die Balkenteile verbindenden mittragenden Gehäuses 2 für ein Getriebe angeordnet sind, welches über eine Zapfwelle 4 mit einem Zapfwellenanschluß eines nicht dargestellten Zugfahrzeuges antriebsmäßig verbindbar ist und dessen Ausgangswelle in einem Balkenteil 1'' untergebracht und über eine im zugehörigen Seitenteil 3 angeordnete Antriebsübertragung, wie Kette od.dgl., mit dem Zinkenrotor 10 zu dessen Antrieb in einer die Fahrtrichtung des Gerätes unterstützenden Umlaufrichtung U gekoppelt ist.

Am Querbalken 1 ist ein Bock 5 oberhalb des Getriebegehäuses 2 angeordnet, an den sich ein Dreipunktgestänge 6 anschließen läßt, mit dem das Gerät anhebbar mit einem nicht dargestellten Zugfahrzeug verbunden ist. Zwischen den Seitenteilen 3 erstreckt sich ein fest angeordneter, an den unteren Schenkeln des Bockes 5 zusätzlich abgestützter Tragbalken 7, der zur Anordnung der Scharwerkzeuge dient, die gegebenenfalls vor dem Zinkenrotor 10, insbesondere als sogenannte Spurlockerer im Bereich der vom Zugfahrzeug hinterlassenen Radspuren, angeordnet werden können. Des weiteren ist zwischen den Seitenteilen 3 oberhalb des Zinkenrotors 10 eine zur Stabilisierung der Seitenteile 3 vorzugsweise mittragende Abdeckung 8 angeordnet, welche den Zinkenrotor im wesentlichen nur nach oben und gegebenenfalls aus Sicherheitsgründen auch teilweise nach vorne abschirmt, nach rückwärts jedoch nur so weit überdeckt, wie aus Spritzschutzgründen erforderlich ist.

Eine Besonderheit des Rahmens des Zinkenrotors 10 liegt darin, daß die Achse des Zinkenrotors 10 in Seitenansicht des Gerätes vor dem Querbalken 1 angeordnet ist. Dadurch können einerseits Zapfwellen 4 üblicher Länge zwischen dem nicht dargestellten Zugfahrzeug und dem im Gehäuse 2 aufgenommenen Getriebe angeordnet werden; andererseits wird damit eine relativ kurze Baulängt des Kombinationsgerätes erzielt, weil der unterhalb der Zapfwelle 4 vorhandene Raum teilweise auch für den Zinkenrotor 10 ausgenutzt wird.

Die Packer- und Krümlerwalze 20 besitzt einen eigenen Walzentragrahmen 23, welcher im wesentlichen aus Seitenarmen 24 sowie einem dieselben H-förmig verbindenden Rahmenquerglied 25 besteht. Mit ihren einen Enden sind die Seitenarme 24 um eine Querachse des Kombinationsgerätes schwenkbar an den Seitenteilen 3 des Rahmens des Zinkenrotors 10 gelagert. An den entgegengesetzten Enden der Seitenarme 24 ist die Achse der Packer- und Krümlerwalze 20 gelagert. Dementsprechend ist der Walzentragrahmen 23 am Rahmen des Zinkenrotors 10 nach Art einer Längsschwinge befestigt.

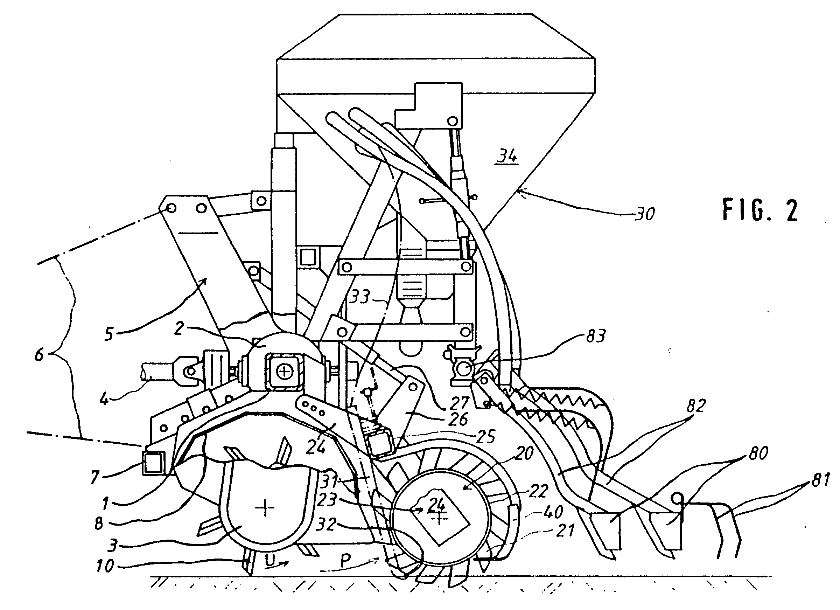

Wie in Fig. 2 angedeutet ist, können an den vorderen Enden der Seitenarme 24 des Walzentragrahmens 23 mehrere Anlenkpunkte angeordnet sein. Damit wird die Möglichkeit geschaffen, den Abstand zwischen den Achsen von Zinkenrotor und Krümlerwalze 20 zu verändern, um eine Anpassung an unterschiedliche Einsatzbedingungen zu ermöglichen. Insbesondere kann gegebenenfalls eine Krümlerwalze 20 mit größerem Durchmesser angeordnet werden, etwa wenn das Gerät auf leichten,sandigen Böden mit geringer Tragkraft arbeiten soll. In der Regel sind Krümlerwalzen 20 mit kleineren Durchmessern wegen des geringeren Gewichtes und Preises bevorzugt.

Auf dem Rahmenquerglied 25 ist ein Mittelarm 26 fest angeordnet, welcher mittels einer längeneinstellbaren Teleskopstütze 27 mit dem Bock 5 verbunden ist. Durch die jeweils eingestellte Länge der Teleskopstütze 27 wird die Lage des Walzentragrahmens 23 relativ zum Rahmen des Zinkenrotors 10 vorgegeben. Damit wird gleichzeitig die Höheneinstellung des Zinkenrotors 10 bestimmt, weil dessen Rahmen bei der Bodenbearbeitung mittels des Dreipunktgestänges 6 schwimmend, d.h. höhenbeweglich, mit dem Zugfahrzeug verbunden ist und dementsprechend das Gewicht des Zinkenrotors 10 sowie seines Rahmens über die Teleskopstütze 27 sowie den Walzentragrahmen 23 auf der Packer- und Krümlerwalze 20 abgestützt ist.

Die Teleskopstütze 27 ist zweckmäßigerweise mit Spiel ausgebildet, derart, daß sich der Zinkenrotor 10 sowie sein Rahmen gegebenenfalls gegenüber der Packer- und Krümlerwalze beim Auftreffen der Rotorzinken auf Steine od.dgl. etwas anheben kann, ohne daß gleichzeitig die Packer- und Krümlerwalze eine entsprechende Vertikalbewegung ausführt.

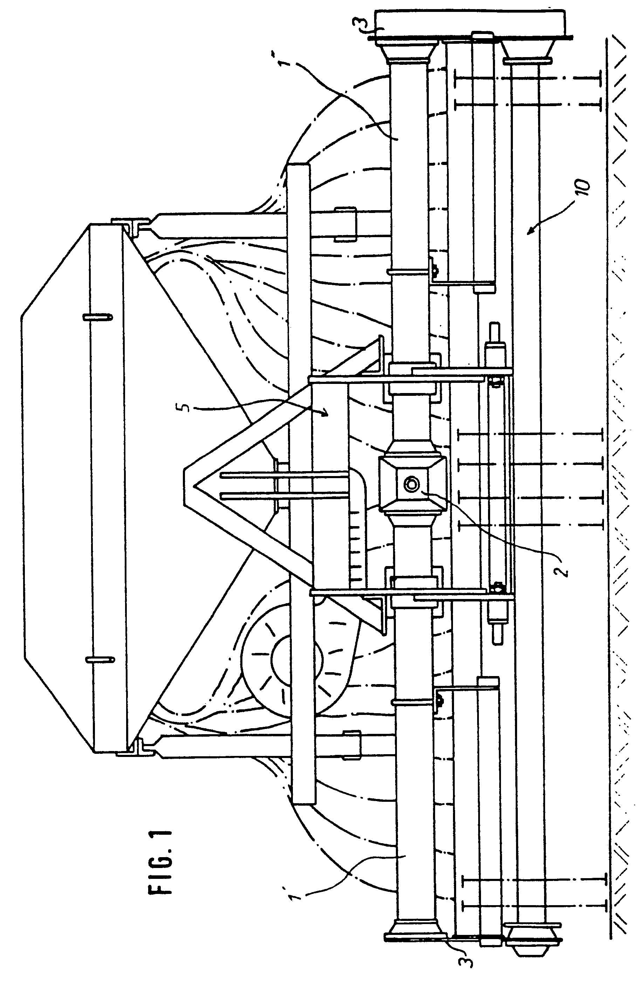

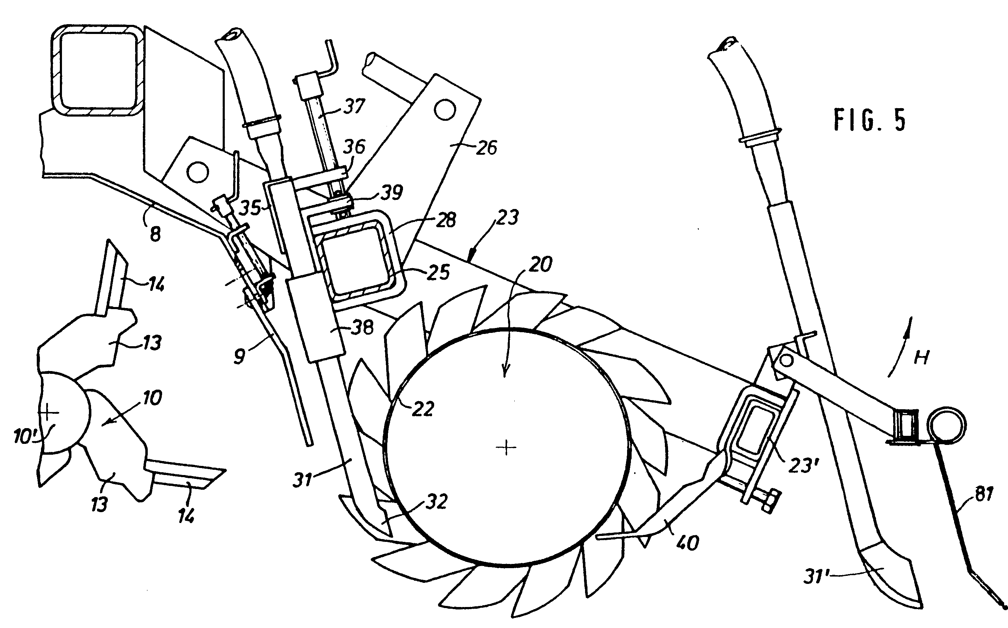

Abweichend von der in Fig. 2 dargestellten Anordnung können der Mittelarm 26 sowie die zwischen Bock 5 und Mittelarm 26 angeordnete Teleskopstütze 27 auch weggelassen werden. Wie in Fig. 4 schematisch dargestellt ist, können stattdessen an beiden seitlichen Enden des Rahmenquergliedes 25 des Walzenrahmens 23 nach oben gerichtete Arme 26′ angeordnet sein, die jeweils mittels Teleskopstützen 27′ gelenkig mit den Seitenteilen 3 (vgl. Fig. 1) am Rahmen des Zinkenrotors 10 verbunden sind. Dabei sind die Teleskopstützen 27′ oberhalb der Seitenarme 24 des Walzenrahmens 23 an den Seitenteilen angelenkt. Die Teleskopstützen 27′ sind wiederum, wie die Teleskopstütze 27, bevorzugt mit Spiel ausgebildet. Aufgrund der seitlichen Anordnung der Arme 26′ sowie der Teleskopstützen ist der Raum zwischen Zinkenrotor 10 und Krümlerwalze 20 von oben gut zugänglich. Dies bietet den Vorteil einer erleichterten Montage der weiter unten beschriebenen Saatauslaufrohre 31 vor der Krümlerwalze 20.

Die Packer- und Krümlerwalze 20 besitzt einen im wesentlichen geschlossenen, kreiszylindrischen Mantel 22, auf dem Zähne 21 jeweils reihenförmig in Radialebenen der Walze 20 angeordnet sind.

Die Zähne 21 besitzen eine parallelogrammartige Form mit parallelen, geradlinigen Vorder- und Hinterkanten gleicher Länge sowie kreisbogenförmigen Innen- und Außenkanten, wobei die Kreisbögen der beiden letztgenannten Kanten gleiche Krümmungsradien besitzen. Damit können die Zähne 21 ohne Verschnitt aus einem Blech ausgeschnitten werden.

Da die entgegen der Umlaufrichtung der Walze 20 weisende Hinterkante der Zähne 21 mit dem Mantel 22 der Walze 20 einen spitzen Winkel einschließt, wird die Walze bei der Fahrt über den zu bearbeitenden Boden von den in die Bodenoberfläche eingedrungenen Zähnen 21 ohne Gefahr eines Durchrutschens in Drehung versetzt.

Wie dargestellt, bleibt zwischen aufeinanderfolgenden Zähnen 21 einer Reihe jeweils eine Lücke frei, deren Größe etwa der Größe der Zähne 21 entspricht. Gegebenenfalls kann der Abstand aufeinanderfolgender Zähne 21 einer Reihe auch noch größer sein. Im übrigen sind die Zähne benachbarter Zahnreihen gegeneinander versetzt angeordnet, so daß jeweils ein Zahn 21 der einen Reihe neben Lücken in den benachbarten Zahnreihen angeordnet ist.

Die Packer- und Krümlerwalze 20 ist unmittelbar hinter dem Zinkenrotor 10 angeordnet, der dementsprechend die von ihm erfaßte Erde entsprechend dem Pfeil P gegen die zugewandte Seite der Packer- und Krümlerwalze 20 wirft. Die Walze 20 bildet also eine Prallfläche in dem vom Zinkenrotor 10 erzeugten und aufgeworfenen Erdstrom, der aufgrund der Rotation der Packer- und Krümlerwalze 20 bei der Fahrt des Gerätes über den zu bearbeitenden Boden besonders wirksam nach unten gelenkt wird. Da die von der Packer- und Krümlerwalze 20 gebildete Prallfläche ständig bewegt wird, wird einerseits eine gute Zer-leinerung gröberer, vom Zinkenrotor 10 aufgeworfener Erdstücke u.dgl. an den Zähnen 21 erreicht, andererseits wirkt der Erdstrom ständig - vergleichbar einem Sandstrahlgebläse - im Sinne einer Reinigung des Mantels 22 der Packer- und Krümlerwalze 20, d.h. an der Walze 20 anhaftende Erde wird ständig durch den Erdstrom abgelöst.

Da gegebenenfalls noch zusätzlich Abstreifer 40 an der Packer- und Krümlerwalze 20 angeordnet sind, kann auch bei sehr feuchten und lehmhaltigen Böden mit einer ständig praktisch vollständig gereinigten Packer- und Krümlerwalze 20 und entsprechend guter Wirkung der Walze 20 gerechnet werden.

Auf dem Querbalken 1 des Rahmens des Zinkenrotors 10 sowie am Bock 5 ist die Saatgut-Austragsvorrichtung 30 abgestützt. Diese besitzt einen Saatgutbehälter 34 mit einer mechanischen oder pneumatischen Verteilvorrichtung, welche das Saatgut auf eine Vielzahl von Zuführleitungen 33 verteilt, die ihrerseits zu Saatauslaufrohren 31 mit Auslaufmündungen 32 führen. Die Saatauslaufrohre 31 bzw. deren die Auslaufmündungen 32 aufweisenden Endstücke sind tangential zur Achse der Packer- und Krümlerwalze 20 jeweils innerhalb des Abstandsraumes benachbarter Zahnreihen 21 der Walze 20 angeordnet.

Die Auslaufmündungen 32 können, wie in Fig. 2 dargestellt ist, verhältnismäßig weit unten etwa im Bereich einer die Unterseite des Walzenmantels 22 tangential berührenden bodenparallelen Ebene angeordnet sein. Eine derart tiefe, gegebenenfalls sogar noch tiefere Anordnung der Auslaufmündungen 32 ist möglich, weil die Saatauslaufrohre 31 bzw. deren untere Enden bei der Bodenarbeit des Gerätes lediglich an den vom Zinkenrotor 10 aufgeworfenen Erdstrom, nicht jedoch in den festen Untergrund unterhalb der vom Zinkenrotor 10 bearbeiteten Bodenschichten hineinragen. Das Verhalten des Erdstromes kann mit dem einer breiartigen Flüssigkeit verglichen werden, d.h. die vom Zinkenrotor 10 aufgeworfene Erde umströmt die Saatauslaufrohre 31 bzw. deren untere Enden und fließt auf der dem Zinkenrotor 10 zugewandten Seite der Packer- und Krümlerwalze 20 bodenwärts, zusätzlich unterstützt durch die Rotationsbewegung der Walze 20. Dementsprechend wird das Saatgut von den Saatauslaufrohren 31 in bzw. unter den dieselben umspülenden Erdstrom eingebracht und mit einer Erdschicht abgedeckt, die durch die Arbeit der Packer- und Krümlerwalze 20 sofort verfestigt wird.

Anstelle der in Fig. 2 dargestellten tiefen Anordnung der Saatauslauföffnungen 32 ist auch eine höhere Anordnung möglich, wie sie z.B. in Fig 5 dargestellt ist. In diesem Falle wird das Saatgut dicht unter der Oberfläche des bearbeiteten Bodens eingebracht.

Von besonderem Vorteil ist, daß das Saatgut nicht von den Zähnen 21 erfaßt und in unerwünscht tiefe Bodenzonen eingedrückt werden kann. Vielmehr bewirken die Zähne 21 aufgrund ihres relativ weiten Eindringens in den Boden lediglich, daß der bearbeitete Boden gut an den Untergrund angebunden und aufgrund der von den Zähnen 21 hinterlassenen und die Krümelbildung fördernden Löcher gut durchlüftet wird.

Weiterhin ist vorteilhaft, daß an den Saatauslaufrohren 31 kein langsträhniges Pflanzengut od.dgl. hängenbleiben kann. Dieses wird nämlich in der Regel vom Erdstrom ohne weiteres fortgespült. Zumindest vermag der Erdstrom jeweils ein Endstück jeder Pflanzensträhne in den Wirkungsbereich einer Zahnreihe 21 und/oder unter die Walze 20 zu spülen, so daß. die Walze 20 die gesamte Strähne bei der Weiterfahrt des Gerätes über dem Boden von den Saatauslaufrohren 31 wegziehen kann. Im übrigen wirken auch die seitlich der Saatauslaufrohre 31 vorbeilaufenden Zahnreihen 21 neben dem Erdstrom im Sinne einer Außenreinigung der Saatauslaufrohre 31.

Gegebenenfalls können mehrere, beispielsweise jeweils zwei, Saatauslaufrohre 31 über eine gemeinsame Zuführleitung 33 mit Saatgut versorgt werden. Dazu sind die jeweils zwei Saatauslaufrohre 31 an ihren oberen Enden Y-förmig, nach Art eines Hosenrohres, miteinander verbunden und an die jeweilige Zuführleitung 33 angeschlossen. Bei hinreichend symmetrischer Ausbildung der Y-förmigen Verbindung bzw. des Hosenrohres wird das ankommende Saatgut mit praktisch vernachlässigbarer Streuung auf die jeweils zwei Saatauslaufrohre 31 verteilt.

Im übrigen sind die Saatauslaufrohre 31 bevorzugt höhen verstellbar angeordnet. Dazu können die Saatauslaufrohre 31 gemäß Fig. 5 an ihren oberen Bereichen an einem in Gerätequerrichtung erstreckten Winkelprofil 35 befestigt sein, an dessen Außenenden Gewindeteile 36 mit Gewindebohrungen für Gewindespindeln 37 angeordnet sind, welche sich mit ihren unteren Enden auf dem Rahmenquerglied 25 des Walzentragrahmens 23 abstützen. Außerdem sind im Bereich der Außenenden des Winkelprofiles 35 angeordnete Saatauslaufrohre 31 verschiebbar in Rohrstücken 38 geführt, welche ihrerseits am Rahmenquerglied 25 des Walzentragrahmens 23 befestigt sind. Beispielsweise können jeweils zwei Rohrstücke 38 an einem Winkelstück 39 angeschweißt sein, dessen einer zwischen den Rohrstücken 38 erstreckter Schenkel mittels einer das Rahmenquerglied 25 des Walzentragrahmens 23 U-förmig umgreifenden Bügelschraube 28 am Rahmenquerglied 25 befestigt ist. Der andere Schenkel des Winkelstückes besitzt eine von der Gewindespindel 37 durchsetzte Bohrung, welche zumindest als Radiallager für die Spindel 37 dient. Gegebenenfalls kann dieser Schenkel auch zur axialen Lagerung der jeweiligen Gewindespindel 37 dienen, indem auf der Gewindespindel auf beiden Seiten dieses Schenkels eine Beilagscheibe angeordnet ist und die Gewindespindel auf den voneinander abgewandten Stirnseiten dieser Beilagscheiben von Splinten od.dgl. mit hinreichender Länge quer zur Spindelachse durchsetzt wird.

Durch Verstellung der Gewindespindel 37 läßt sich das Winkelprofil 35 zusammen mit den daran befestigten Saatauslaufrohren 31 in der Höhe einstellen.

Die Saatauslaufrohre 31 sind bevorzugt mit Federbarkeit in Gerätelängsrichtung angeordnet, derart, daß die Rohre 31 zur Walze 20 oder zum Zinkenrotor 10 hin ausweichen bzw. ausschwenken können, z.B. wenn vom Rotor 10 Steine gegen die Rohre 31 geschleudert werden oder wenn vom Rotor 10 hochgeschleuderte Steine in den engen Abstandsraum zwischen dem Walzenmantel 22 und den Rohren 31 fallen.

An der Packer- und Krümlerwalze 20 sind bevorzugt Abstreifer 40 angeordnet, wie in den Fig. 2 bis 5 dargestellt ist.

Zur Halterung können gemäß den Figuren 2 bis 4 am Rahmenquerglied 25 des Walzentragrahmens 23 mehrfach bügelförmige Flachteile 45 angeschweißt sein, welche die Packer- und Krümlerwalze 20 in Umfangsrichtung teilweise umfassen und jeweils zwischen benachbarten Zahnreihen 21 angeordnet sind. Dementsprechend brauchen diese bügelförmigen Flachteile 45 in Achsansicht der Walze nur wenig oder gar nicht über die radial äußeren Kanten der Zähne 21 hinauszuragen. Zur Stabilisierung der Flachteile 45 sind dieselben nahe ihrer freien Enden durch ein mit ihnen verschweißtes querverlaufendes Flachband untereinander verbunden. Die Flachhteile 45 bilden eine korb- bzw. gitterartige Abdeckung der Packer- und Krümlerwalze 20, welche dementsprechend gegen ungewollte Berührung durch personen abgeschirmt ist.

An den freien Enden der bügelförmigen Flachteile 45 ist jeweils ein Gewindestück 47 angeschweißt, in dessen Gewindebohrung eine Einstellschraube 44 eingesetzt ist, welche dazu dient, die Abstreifer 40 gegen den Mantel 22 der Packer- und Krümlerwalze 20 zu drängen.

Die Abstreifer 40 sind jeweils aus einem trapezförmigen Blechstück hergestellt, dessen schmaleres Ende das mit dem Walzenmantel 20 zusammenwirkende Abstreiferblech 41 bildet, während der daran anschließende breitere Bereich unter Bildung eines zur Einstellschraube 44 hin geöffneten U-Profiles, welches den Stiel des Abstreifers 40 bildet, gefaltet ist. Das freie Ende des U-Profiles umgreift jeweils U-förmig das zugehörige freie Ende eines der bügelförmigen Flachteile 45 und ist darauf mittels eines Bolzens schwenkgelagert. Durch die U-förmige Umfassung des Endstückes des bügelförmigen Flachteiles 45 wird eine sehr stabile, gegen Bewegung in Querrichtung des Gerätes gesicherte Lagerung bewirkt. Im übrigen wird durch das U-Profil das Gewinde der darin teilweise aufgenommenen Einstellschraube 44 gegen Verschmutzung geschützt. Dementsprechend kann eine Verstellung der Einstellschraube auch nach längerem Gebrauch des Gerätes ohne unzumutbaren Kraftaufwand vorgenommen werden.

Die Abstreiferbleche 41 sind etwas schmaler als der Abstand benachbarter Zahnreihen 21 der Packer- und Krümlerwalze 20. Dadurch wird den Abstreiferblechen 41 nur ein vergleichsweise geringer Widerstand entgegengesetzt, wenn am Walzenmantel 22 anhaftende Erde abgeschält wird. Gleichwohl wird eine hinreichende Reinigung der Walze 20 erreicht.

Ein besonderer Vorzug der beschriebenen Anordnung besteht darin, daß die gesamte Abstreiferanordnung nur wenig Raum in der Umgebung der Packer- und Krümlerwalze 20 benötigt.

Um vom Zugfahrzeug hinterlassene Radspuren, insbesondere auf weichen und lehmigen Böden, noch besser einebnen zu können, können im Bereich dieser Spuren am Tragbalken 7 Scharwerkzeuge od.dgl. angeordnet sein. Vor- bzw. Tiefenlockerungswerkzeuge können ebenfalls vorgesehen sein.

Bei dem oben beschriebenen Gerät wurde davon ausgegangen, daß der Boden auf der gesamten Breite des Gerätes gleichartig bearbeitet wird.

Abweichend davon ist es jedoch auch möglich, den Boden jeweils nur auf parallelen Streifen, die in Gerätequerrichtung nebeneinander liegen, zu bearbeiten und dazwischenliegende Streifen praktisch unbearbeitet zu lassen. Eine solche Bearbeitungsweise kann für Reihenkulturen sowie in stark erosionsgefährdeten oder sehr feuchten Gebieten zweckmäßig sein. Die unbearbeiteten Bodenstreifen sowie der darauf vorhandene Bewuchs schützen nämlich die bearbeiteten Bodenstreifen vor Angriffen durch Wind und Regen. Außerdem sorgen diese unbearbeiteten Bodenstreifen dafür, daß feuchte Felder auch dann leichter austrocknen können, wenn die jeweils gesetzten Kulturpflanzen bereits eine größere Höhe erreicht haben.

Um die geschilderte streifenförmige Bodenbearbeitung zu ermöglichen, sind die Zinken des Zinkenrotors 10 entsprechend gruppenweise angeordnet, d.h. zwischen je zwei Zinkengruppen bleibt in Achsrichtung des Zinkenrotors ein der Breite des nicht zu bearbeitenden Bodenstreifens etwa entsprechender Raum frei. Darüber hinaus ist auch die Packer- und Krümlerwalze 20 im Bereich der nicht zu bearbeitenden Streifen ausgespart bzw. mit vermindertem Durchmesser und/oder ohne Zähne angeordnet. Im übrigen sind die Saatauslaufrohre 31 nur innerhalb der benachbarten Bodenstreifen vorhanden.

Gegebenenfalls können gemäß Fig. 2 anstelle der vor der Packer- und Krümlerwalze 20 angeordneten Saatauslaufrohre 31 bzw. zusätzlich zu den Saatauslaufrohren 31 auch hinter der Walze 20 Säschare 80, gegebenenfalls kombiniert mit federnden Striegeln 81, angeordnet sein. Dabei sind die zu den Säscharen 80 führenden Zuführrohre 82 für das Saatgut zweckmäßig als Halterungen der Säschare 80 angeordnet und ihrerseits hochklappbar an einem Querträger 83 befestigt, welcher seinerseits am Rahmen des Zinkenrotors 10 befestigt ist. Dabei ist die Anordnung derart ausgebildet, daß die Säschare 80 aus der in Fig. 2 dargestellten Arbeitslage zum Transport in den Freiraum unterhalb des Saatgutbehälters 34 und oberhalb der Packer- und Krümlerwalze 20 eingeschwenkt werden können.

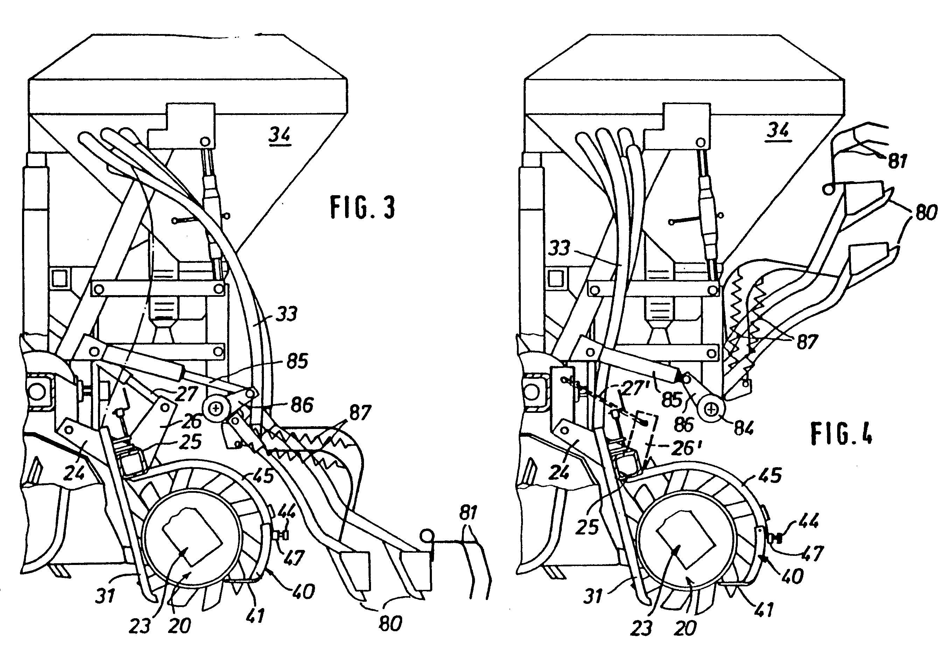

Dabei können die Säschare 80, wie in den Fig. 3 und 4 genauer dargestellt ist, mittels ihrer zur Zuführung des Saatgutes dienenden Zuführrohre 82 an einer über der Krümlerbzw. Packerwalze 20 angeordneten Querwelle 84 angeordnet sein, welche mittels eines Hydraulikaggregates 85, dessen eines Ende an einem Kurbelarm 86 der Querwelle 84 angelenkt ist, verschwenkt werden kann. Dementsprechend lassen sich die Säschare 80 aus der in Fig. 3 dargestellten Arbeitslage hydraulisch in die in Fig. 4 dargestellte Transportlage verschwenken. Um eine Anpassung an Bodenunebenheiten zu ermöglichen, sind die Zuführrohre 82 relativ zur Querwelle 84 schwenkbeweglich angeordnet, wobei die Zuführrohre 82 relativ zur Querwelle 84 mittels Federn 87 (in den Fig. 3 und 4 im Uhrzeigersinne) in eine Endlage relativ zur Querwelle 84 gespannt sind.

In der Transportstellung (vgl. Fig. 4) sind die Säschare 80 in Gerätelängsrichtung nach vorn verlagert, so daß die Gesamtlänge des Kombinationsgerätes entsprechend verkürzt ist und dasselbe vom Zugfahrzeug aus leichter angehoben werden kann.

Wenn das Kombinationsgerät sowohl mit Saatauslaufrohren 31 dicht vor der Krümler- bzw. Packerwalze 20 als auch mit Säscharen 80 hinter der Walze 20 ausgerüstet ist, sind die flexiblen Zuführleitungen 33 vorzugsweise derart angeordnet, daß sie wahlweise mit den Saatauslaufrohren 31 bzw. den Zuführrohren 82 der Säschare 80 verbunden bzw. zusammengesteckt werden können. Gegebenenfalls können aber auch die Saatauslaufrohre 31 und die Säschare 80 bzw. deren Zuführrohre 82 mit getrennten Kammern eines Behälters 34 oder mit zwei Behältern verbunden sein, so daß die Möglichkeit gegeben ist, wahlweise das eine oder ein anderes Saatgut oder verschiedene Saatgüter bzw. Dünge- und Saatgut gleichzeitig auszutragen.

Die Saatauslaufrohre 31 eignen sich vor allem für flach im Boden einzubringende Saatgut, insbesondere Saatgut von Zwischenfrüchten, beispielsweise Raps oder andere Pflanzen zur Gründüngung. Darüber hinaus können die Saatauslaufrohre 31 auch vorteilhaft zur Einsaat von Getreide verwendet werden, wenn eine sogenannte Breitsaat, d.h. eine Pflanzung mit sehr engen Pflanzenabständen erwünscht ist. Die Säschare 80 eignen sich besonders für die sogenannte Drillsaat, bei der das Saatgut verhältnismäßig tief in voneinander beabstandeten Reihen in den Boden eingebracht wird. Beim kombinierten Austragen verschiedener Saatgüter wird das Saatgut für die Nutzpflanzen in der Regel über die Säschare 80 in den Boden eingebracht, während über die Saatauslaufrohre 31 bevorzugt schnell und niedrig wachsende Pflanzen ausgesät werden, die einerseits die Nutzpflanzen während der ersten Wachstumsphase derselben schützen, insbesondere vor Windangriff, und andererseits einer Bodenerosion entgegenwirken. Als Pflanzen mit derartiger Schutzfunktion sind beispielsweise Gräser geeignet.

Grundsätzlich ist es aber auch möglich, die Haupt- bzw. Nutzkultur mittels der Saatauslaufrohre 31 auszusäen und das Saatgut für Dünge- bzw. Schutzpflanzungen über die Säschare 80 in den Boden einzubringen.

In Fig. 5 ist ein abgewandelter Walzentragrahmen 23 dargestellt, wobei die Striegel 81 an einem Querbalken des Rahmens 23 hinter der Packer- und Krümlerwalze 20 in Pfeilrichtung H hochschwenkbar angeordnet sind, derart, daß die Striegel 81 in hochgeklappter Stellung eine Lage oberhalb der Walze 20 einnehmen. Außerdem sind anstelle von Säscharen hinter der Walze 20 weitere Saatauslaufrohre 31' angeordnet. Das von denselben ausgetragene Saatgut wird durch die Striegel 81 in den Boden eingestrichen. Es kann also gegebenenfalls eine ganz flache Samenablage erreicht werden.

Des weiteren ist aus Fig. 5 ersichtlich, daß hinter dem Zinkenrotor 10 noch ein die Abdeckung 8 nach schräg abwärts verlängerndes Abdeckblech 9 höhenverstellbar angeordnet sein kann, um die vertikale Höhe des auf die Krümler- bzw. Packerwalze aufprallenden, vom Zinkenrotor 10 erzeugten Erdstromes einstellen zu können. Mittels des höhenverstellbaren Abdeckbleches 9 kann der auf die Walze 20 aufprallende Erdstrom einerseits optimal auf die jeweilige Höheneinstellung der Saatauslaufmündungen 32 der Saatauslaufrohre 31 eingestellt werden. Andererseits kann das Abdeckblech 9 zur Anpassung des Erdstromes an unterschiedliche Walzendurchmesser dienen, wenn das Kombinationsgerät aus unterschiedlichen Einzelelementen zusammengestellt wird.

Das Abdeckblech 9 kann gegebenenfalls auch im Bereich seines an die Abdeckung 8 grenzenden oberen Randes um eine zur Achse des Zinkenrotors 10 parallele Achse schwenkbar am Rahmen des Zinkenrotors 10 angeordnet sein. Damit kann auch die Schräglage des Abdeckbleches 9 verändert werden. Falls dabei das am Rahmen des Zinkenrotors 10 schwenkgelagerte Abdeckblech 9 mittels Streben od.dgl. am Rahmen 23 der Krümelwalze abgestützt ist, verändert sich die Schräglage des Abdeckbleches 9 automatisch, wenn der Rahmen 23 der Krümelwalze 20, etwa durch Verstellung der Abstützung 27 (vgl. Fig. 2), relativ zum Rahmen des Zinkenrotors 10 verstellt wird.

Darüber hinaus ist es möglich, das schwenkbare Abdeckblech 9 jeweils federnd abzustützen, so daß es der aufprallenden Erde jeweils federnd nachgeben kann.

Als federnde Abstützelemente dienen insbesondere bügelförmige Federelemente mit einem U-förmigen, federnden Mittelbereich und an dessen Enden nach außen abgebogenen Endstücken, welche einerseits am Abdeckblech 9 und andererseits am Rahmen des Zinkenrotors 10 bzw. einem damit verbundenen Teil oder am Rahmen 23 der Krümlerwalze 20 jeweils um eine Querachse schwenkbar angelenkt sein können.

Der in Fig. 5 zur Halterung der Abstreifer 40 dienende Querbalken 23' des Walzenrahmens 23 ist an seinen beiden seitlichen Enden mit Längsgliedern des Walzenrahmens 23 fest verbunden. Im Mittelbereich kann der Querbalken 23' gegebenenfalls noch mittels einer zusätzlichen Halterung abgestützt sein, welche eine Höhenbewegung des Balkens 23' zuläßt, jedoch einer Verwindung des Querbalkens 23' entgegenwirkt. Dadurch wird noch besser gewährleistet, daß sich die Abstreifer 40 auch bei eventuellen Verwindungen des Rahmens 23 der Krümelwalze 20 nicht vom Walzenmantel 22 abheben können.

Beispielsweise kann der Querbalken 23' in seinem Mittelbereich in einer Führungskulisse aufgenommen sein, welche die Höhenbeweglichkeit des Querbalkens 23' zuläßt, jedoch einer Verwindung desselben entgegenwirkt. Die Kulisse kann mittels Streben od.dgl. am Mittelarm 26 des Walzenrahmens befestigt sein.

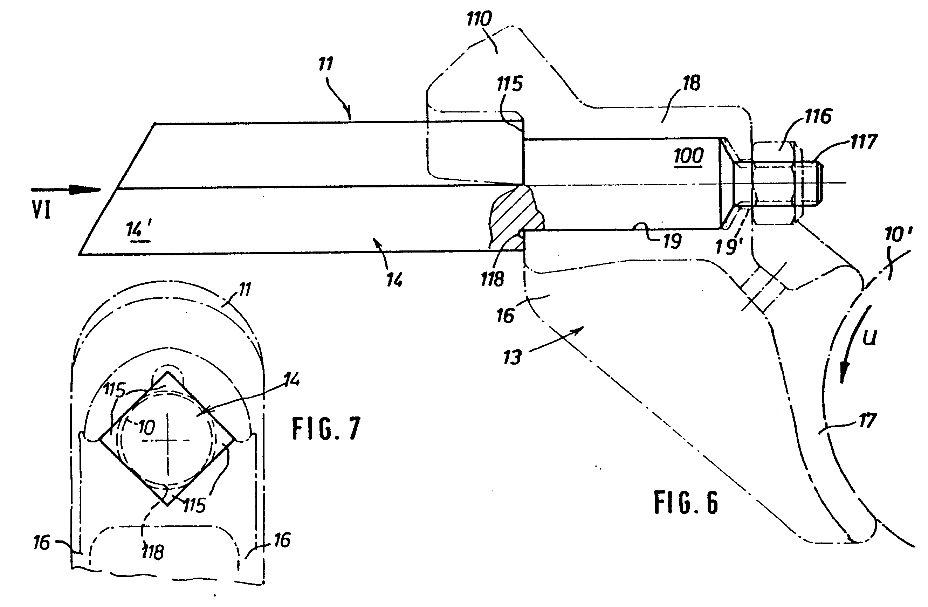

In den Fig. 6 und 7 ist eine erste bevorzugte Ausführungsform der Zinken 11 dargestellt, wobei Fig. 6 eine teilweise geschnittene Seitenansicht und Fig. 7 eine Ansicht entsprechend dem pfeil VI in Fig. 6 zeigen.

Jeder Zinken 11 besteht im wesentlichen aus einem an der Rotorwelle 10' fest angeordneten Haltearm 13, an welchem ein zur eigentlichen Bodenbearbeitung vorgesehenes Zinkenstück 14 austauschbar angeordnet ist.

Der Haltearm 13 ist gegenüber dem Zinkenstück 14 unter einem in Umlaufrichtung U des Zinkenrotors 10 geöffneten stumpfen Winkel angeordnet, derart, daß ein von der Rotorachse zum freien Ende des Zinkenstückes 14 bzw. des Zinkens 11 verlaufender Radialstrahl den Verbindungsbereich zwischen Rotorwelle 10' und Haltearm 13 - in Achsrichtung des Rotors gesehen - etwa in der Mitte durchsetzt.

Aufgrund dieser Ausbildung führt das Zinkenstück 14 beim Umlauf des Rotors gegenüber der Erdoberfläche auch eine Stichbewegung, d.h. eine Bewegung mit Komponente in Längsrichtung des Zinkenstückes 14, aus.

Der Haltearm 13 ist als Schmiedeteil mit H-artigem Querschnitt ausgebildet. Am rotorwellenseitigen Ende des Haltearmes 13 ist zwischen den H-Schenkeln 16 eine der Krümmung der Umfangsfläche der Rotorwelle 10' angepaßte Verbindungsfläche 17 ausgebildet, welche die Rotorwelle 10' bzw. -achse in Umfangsrichtung über nahezu einen Viertelkreisbogen umfaßt.

Am äußeren Ende des Haltearmes 13 ist zwischen den H-Schenkeln 16 ein hülsenartiges Teil 18 mit einer Bohrung 19 angeordnet, welche an ihrem der Rotorachse bzw. -nabe näheren Ende durch einen kegelmantelförmigen Boden abgeschlossen ist, welcher eine zur Bohrung 19 axiale Öffnung 19' mit gegenüber der Bohrung 19 vermindertem Durchmesser aufweist.

An dem von der Rotorwelle 10' ferneren Stirnende des hülsenartigen Teiles 18 ist auf dessen von der Rotorwelle 10' entfernteren Seite ein wulstartig verdickter Rand 110 angeformt, welcher seitlich des Haltearmes 13 als Verdickung in die H-Schenkel 16 übergeht.

Das Zinkenstück 14 besitzt einen für die Bodenarbeit vorgesehenen dickeren Bereich 14' mit quadratischem Querschnitt, welcher derart angeordnet ist, daß eine Kante unter Bildung eines Keiles in die Umlaufrichtung U weist. Das freie Ende des dickeren Bereiches 14' ist, wie in Fig. 6 ersichtlich, abgeschrägt.

An den dickeren Bereich schließt sich ein verjüngtes Teilstück 100 mit kreisförmigem Querschnitt an, dessen Durchmesser im dargestellten Beispiel der Kantenlänge des quadratischen Querschnittes des dickeren Bereiches 14' entspricht. An den verjüngten Bereich 100 schließt sich mit vermindertem Durchmesser ein zapfenförmiger Fortsatz mit Außengewinde 117 axial an.

Das Zinkenstück 14 läßt sich mit dem verjüngten Bereich 100 in die Bohrung 19 des hülsenförmigen Teiles 18 derart einschieben, daß der Gewindeabschnitt 117 die Öffnung 19' durchsetzt und die Stufen 115 zwischen dem dickeren Bereich 14' und dem verjüngten Teilstück 100 des Zinkenstückes 14 auf einem zugewandten Stirnrand bzw. einer entsprechenden Stirnfläche am hülsenartigen Teil 18 aufsitzen. Gleichzeitig liegt der wulstartig verdickte Rand 110 mit zwei Abstützflächen auf den von der Rotorachse bzw. -nabe 20' abgewandten Seiten des dickeren Bereiches 14' des Zinkenstückes 14 auf.

Da der verjüngte Bereich 100 des Zinkenstückes 14 etwas kürzer ist als die Bohrung 19 des hülsenförmigen Teiles 18, verbleibt zwischen dem kegelmantelförmigen Boden der Bohrung 19 im Bereich der Öffnung 19' und dem entsprechend kegelmantelförmigen Übergang zwischen dem verjüngten Bereich 100 und dem Gewindeabschnitt 117 ein Abstandsraum, welcher es ermöglicht, daß das Zinkenstück 14 mittels einer auf dem Gewindeabschnitt 117 angeordneten Mutter derart verspannt werden kann, daß die Stufenflächen 115 zwischen dem dickeren Bereich 14' und dem verjüngten Teilstück 100 mit entsprechender Kraft gegen die zugewandte Stirnseite des hülsenförmigen Teiles 18 gespannt sind. Eine Nut 118 im Übergangsbereich zwischen Umfangsfläche des verjüngten Teilstückes 100 und den genannten Stufenflächen verhindert dabei die Bildung von Kerben bzw. Rissen im Zinkenstück 14.

Aufgrund der dargestellten Art der Befestigung kann das Zinkenstück 14 leicht ausgewechselt werden. Darüber hinaus wird eine äußerst stabile Halterung erreicht, weil eventuell auf das Zinkenstück 14 bei der Bodenarbeit einwirkende Querkräfte vom wulstartig verdickten Rand 110 aufgenommen bzw. aufgrund der Verspannung zwischen Zinkenstück 14 und hülsenförmigem Teil 18 axial in das letztere eingeleitet werden.

Abweichend von der dargestellten Ausführungsform kann der Gewindeabschnitt 117 als Teil einer Schraube angeordnet sein, deren Kopf anstelle der Mutter 116 angeordnet ist und deren Gewindeschaft in eine Gewindebohrung im verjüngten Teilstück 100 des Zinkenstückes 14 eingeschraubt.

Im übrigen kann die Bohrung 19 des hülsenförmigen Teiles von Stirnende zu Stirnende desselben mit gleichbleibendem Durchmesser durchgeführt sein. In diesem Falle wird die Mutter 116 bzw. der stattdessen angeordnete Schraubenkopf unter Zwischenschaltung einer Ringscheibe od.dgl. am zugewandten Ende des hülsenförmigen Teiles 18 abgestützt.

Die Zinkenendstücke 14 besitzen einen im wesentlichen quadratischen Querschnitt und sind derart angeordnet, daß jeweils eine Längskante des Zinkenendstückes 14 eine in Umlaufrichtung U weisende keilförmige Schlagkante bildet.

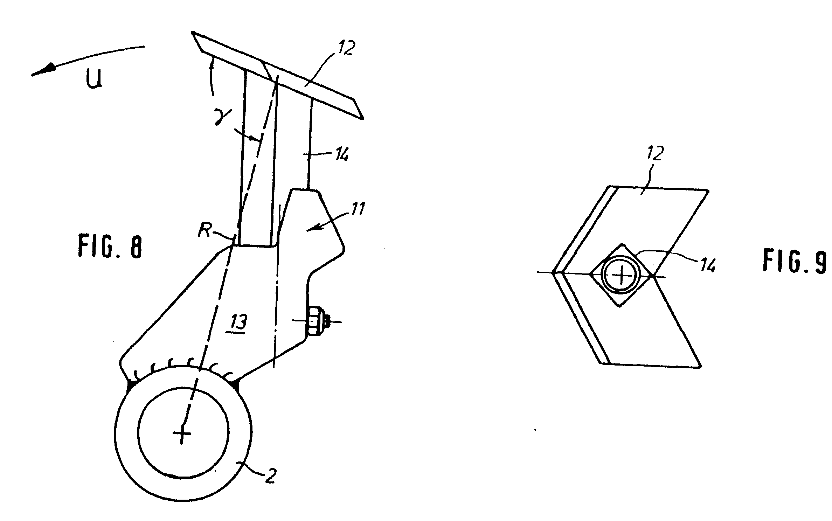

Die Besonderheit der Rotorzinken 11 in den Figuren 8 bis 11 besteht nun darin, daß am freien Ende der Zinkenendstücke 14 jeweils ein Schneidblatt 12, vorzugsweise in Form pfeilförmig angeordneter kurzer Flügel (vgl. Fig. 9) angeordnet ist. Dabei sind die Schneidblätter 12 mit Anschnittwirkung angeordnet, d.h. in Achsansicht des Zinkenrotors 10 bildet ein von der Achse der Rotorwelle aus zum Verbindungsbereich zwischen Zinkenendstück 14 und Schneidblatt 12 erstreckter Radialstrahl R mit der vom Schneidblatt 12 gebildeten Ebene einen in Umlaufrichtung U geöffneten stumpfen Winkel b. Dementsprechend sucht das Schneidblatt 12 beim Einbringen in den Erdboden die erfaßte Erde etwas anzuheben (Anschnittwirkung).

Bei der in den Figuren 8 und 9 dargestellten Ausführungsform erstrecken sich die Schneidblätter 12 im übrigen parallel zur Achse der Rotorwelle.

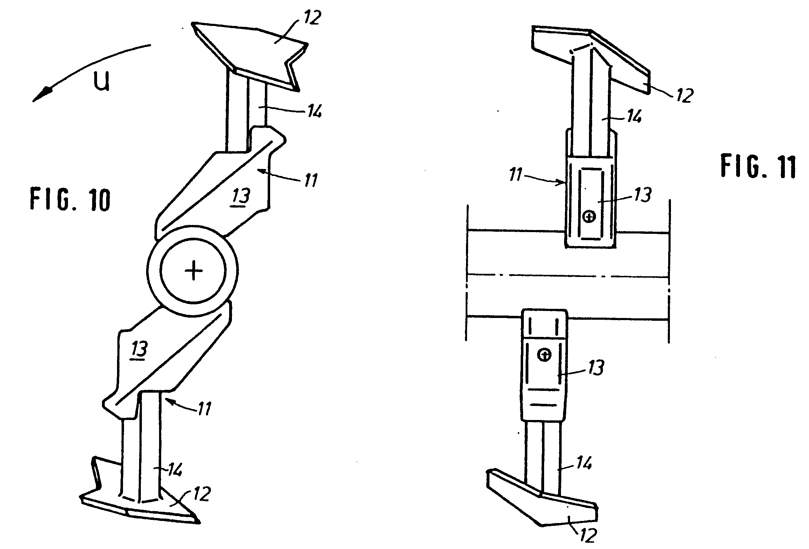

Bei den in den Figuren 10 und 11 dargestellten Zinken verläuft die Achse der Rotorwelle geneigt zu den Schneidblättern 12. Darüber hinaus sind die Zinken bevorzugt jeweils paarweise einander bezüglich der Rotorwelle diametral gegenüber mit zueinander paarweise etwa parallelen Schneidblättern 12 angeordnet. Außerdem sind die Zinken eines Paares bevorzugt in Achsrichtung des Rotors 10 etwas zueinander versetzt. Die jeweils ein Zinkenpaar bildenden bzw. als Doppelsatz angeordneten Rotorzinken 11 erzeugen mit ihren Schneidblättern 12 dementsprechend im Boden einen Arbeitshorizont mit dachförmigem profil. Dies ermöglicht es beispielsweise, das Saatgut durch entsprechende Anordnung der Saatauslaufrohre 31 bzw. Säschare 80 jeweils im Bereich der Firstlinie des dachförmigen Profiles einzubringen, während seitwärts derselben Dünger zugeführt werden kann.

Ganz allgemein erhöhen die Schneidblätter 12 unabhängig von der Art ihrer Anordnung an den Zinkenendstücken 14 die Breitenwirkung der Rotorzinken; darüber hinaus wird im Boden befindliches strähniges Gut, wie Wurzelreste od.dgl., zerschnitten. Aufgrund dieser Wirkung der Schneidblätter 12 genügt es, den Rotor 10 mit nur wenigen Zinken zu bestücken, beispielsweise können zwischen Zinken bzw. Zinkenpaaren, die einander in Achsrichtung des Zinkenrotors 10 benachbart sind, Abstände vorhanden sein, die der Wirkungsbreite der Schneidblätter entsprechen. Da darüber hinaus in einer Radialebene des Zinkenrotors in der Regel jeweils höchstens ein Zinken angeordnet ist, ergibt sich also eine außerordentlich offene Zinkenanordnung, welche unter anderem auch deshalb vorteilhaft ist, weil praktisch jegliche Möglichkeit ausgeschlossen wird, daß sich langsträhniges Gut an den Zinken bzw. der Rotorwelle verschlingen kann. Schließlich bieten die Schneidblätter 12 den weiteren Vorteil, daß sie beim Rotorumlauf in die Fahrtrichtung unterstützender Umlaufrichtung U den vom Zinkenrotor 10 bewirkten Vortrieb erhöhen.

**Patentansprüche**

1. Landwirtschaftliches Bodenbearbeitungsgerät mit einem den Boden auf- bzw. umbrechenden Zinkenrotor (10), welcher in die Fahrt des Gerätes unterstützender Laufrichtung antreibbar ist, dadurch gekennzeichnet, daß die Zinken (11) jeweils fest an der Rotorachse bzw. -nabe angeordnete Haltearme (13) sowie darin austauschbar gehaltene, die Bodenarbeit ausführende Zinkenstücke (14) besitzen, die mit den Haltearmen (13) jeweils einen in Umlaufrichtung geöffneten Winkel bilden, wobei die Zinkenstücke (14) mit einem verjüngten Teilstück (100) in eine hülsenförmige Aufnahme (18) am Haltearm (13) eingesetzt und auf der von der Rotorachse bzw. -nabe abgewandten Seite ihres an das verjüngte Teilstück (100) anschließenden dickeren Bereiches (14'), welcher einen Querschnitt mit in Umlaufrichtung des Rotors weisender Kante aufweist, von einem am Haltearm (13) im Anschluß an die hülsenförmige Aufnahme (18) angeordneten, wulstartig verstärkten Rand (110) abgestützt sind, und daß an den freien Enden der Zinkenstücke (14) Schneidblätter (12) angeordnet sind, welche - in Achsansicht des Zinkenrotors (10) gesehen - mit einer das freie Ende tangential zur Rotorachse durchsetzenden Linie einen Winkel bilden, derart, daß die Schneidblätter (12) beim Rotorumlauf (U) erfaßte Erde anzuheben suchen (Anschnittwirkung).

2. Bodenbearbeitungsgerät nach Anspruch 1, dadurch gekennzeichnet, daß jedes Zinkenstück (14) mit seiner zwischen dem verjüngten Teil (100) und dem dickeren Bereich (14') gebildeten Stufe (115) gegen das zugewandte Stirnende der hülsenförmigen Aufnahme (18) spannbar ist, indem ein Muttern- bzw. Schraubteil (116), welches an bzw. auf dem mit entsprechendem Gewinde versehenen freien Ende des verjüngten Teilstückes (100) angeordnet ist, gegen das andere Stirnende der Aufnahme (18) spannbar ist.

3. Bodenbearbeitungsgerät nach einem der Ansprüche 1 oder 2, dadurch gekennzeichnet, daß die Schneidblätter (12) in Gerätequerrichtung etwa parallel zur Rotorachse erstreckt sind (Figuren 8, 9).

4. Bodenbearbeitungsgerät nach einem der Ansprüche 1 bis 3, dadurch gekennzeichnet, daß der Zinkenrotor (10) mit hinreichender Umlaufgeschwindigkeit antreibbar ist, derart, daß eine Bestückung mit jeweils nur einer einzigen Zinke in relativ weit voneinander beabstandeten Radialebenen der Rotorachse ausreicht.

5. Bodenbearbeitungsgerät mit einem den Boden auf- bzw. umbrechenden Zinkenrotor (10), welcher in die Fahrt des Gerätes unterstützender Laufrichtung antreibbar ist, nach einem der Ansprüche 1 bis 4, sowie einer dahinter arbeitenden Packer- und Krümlerwalze (20), welche mit in Radialebenen der Walze (20) angeordneten Zahnreihen (21) in den Boden eindringt, und mit einer Saatgut-Austragsvorrichtung, die vor der packer- und Krümlerwalze (20) angeordnete Saatauslaufrohre (31) besitzt, dadurch gekennzeichnet, daß die Saatauslaufrohre (31) jeweils in den Abstandsraum zwischen benachbarten Zahnreihen (21) mündend und die Packer- und Krümlerwalze (20) dicht hinter dem Zinkenrotor (10) als Prallfläche im Erdstrom angeordnet bzw. anbringbar sind, welcher vom Zinkenrotor (10) bei der Bodenarbeit erzeugt wird.

6. Bodenbearbeitungsgerät nach Anspruch 5, dadurch gekennzeichnet, daß die zu den Auslaufmündungen (32) der Saatauslaufrohre (31) führenden Endstücke derselben etwa tangential zur Walzenachse ausgerichtet bzw. ausrichtbar sind und/oder die Außenenden der Zähne (21) in Achsansicht der Walze (20) über die Auslaufmündungen (32) bzw. Endstücke der Saatauslaufrohre (31) in Radialrichtung bezüglich der Walzenachse hinausragen.

7. Bodenbearbeitungsgerät nach einem der Ansprüche 5 oder 6, dadurch gekennzeichnet, daß die Auslaufmündungen (32) der Saatauslaufrohre (31) in Seitenansicht des Gerätes etwa in Höhe bzw. dicht oberhalb des Arbeitshorizontes (H) des Zinkenrotors (10) anbringbar sind.

8. Bodenbearbeitungsgerät nach einem der Ansprüche 5 bis 7, dadurch gekennzeichnet, daß zusätzlich bzw. alternativ zu den Saatauslaufrohren (31) vor der Krümlerwalze (20) hinter derselben weitere Saatauslaufrohre oder Säschare (80), vorzugsweise kombiniert mit federnden Striegeln, angeordnet sind, wobei die weiteren Saatauslaufrohre oder Säschare (80) um eine Querachse oberhalb der Krümlerwalze (20) hochklappbar angeordnet sind und aus einer abgesenkten Arbeitslage unter Verkürzung der Gesamtlänge des Bodenbearbeitungsgerätes in eine Transportlage hochschwenkbar sind.

9. Bodenbearbeitungsgerät nach Anspruch 8, dadurch gekennzeichnet, daß die Säschare (80) mittels ihrer zur Saatgutzuführung dienenden Zuführrohre (82) an einem Querbalken bzw. einer vorzugsweise hydraulisch schwenkbaren Querwelle oberhalb der Krümlerwalze (20) befestigt sind.

**Revendications**

1. Appareil agricole de travail du sol comprenant un rotor à dents (10) destiné à soulever ou à briser la terre, qui peut être entraîné dans un sens de rotation qui favorise l'avance de l'appareil, caractérisé, en ce que chaque dent (11) possède un bras porteur (13) monté solidairement sur l'axe ou le moyeu du rotor ainsi qu'un élément de dent (14) monté interchangeable dans ce bras, et qui effectue le travail du sol, cet élément formant avec le bras porteur (13) un angle qui est ouvert dans le sens de la rotation, l'élément de dent (14) étant encastré par une partie amincie (100) dans un logement en forme de douille (18) prévu sur le bras porteur (13), et étant soutenu sur le côté, éloigné de l'axe ou du moyeu du rotor de sa région épaissie (14') qui fait suite à la partie amincie (100), laquelle région épaissie présente une section possédant une arête dirigée dans le sens de la rotation du rotor, par un bord (110) épaissi en forme de bourrelet, qui est prévu sur le bras porteur (13) à la suite du logement en forme de douille (18), et en ce que, aux extrémités libres des éléments de dents (14), sont agencées des lames de coupe (12) qui, considérées dans une vue axiale du rotor à dents (10), forment un certain angle avec une ligne qui passe par l'extrémité libre et est orientée tangentiellement à l'axe du rotor, de telle manière que les lames de coupe (12) tendent à soulever la terre prise pendant la rotation (U) du rotor (effet d'engagement).

2. Appareil de travail du sol selon la revendication 1, caractérisé en ce que chaque élément de dent (14) peut être serré par son épaulement (115) formé entre la partie amincie (100) et la région épaissie (14'), contre l'extrémité frontale du logement (18) en forme de douille qui est dirigée vers cet épaulement, par le fait qu'une partie écrou ou filetée (116) qui est disposée à l'extrémité libre, ou sur cette extrémité libre, munie d'un filetage correspondant, de la partie amincie (100), peut être serrée contre l'autre extrémité frontale du logement (18).

3. Appareil de travail du sol selon une des revendications 1 et 2, caractérisé en ce que les lames coupantes (12) s'étendent à peu prés parallèlement à l'axe du rotor dans la direction transversale de l'appareil (figures 8, 9).

4. Appareil de travail du sol selon une des revendications 1 à 3, caractérisé en ce que le rotor denté (10) peut être entraîné à une vitesse de rotation suffisante pour qu'un équipement comprenant une seule dent dans chacun de plusieurs plans radiaux de l'axe du rotor relativement espacés les uns des autres soit suffisant.

5. Appareil de travail du sol comprenant un rotor à dents (10 capable de soulever ou de retourner le sol. qui peut être entraîné dans le sens de rotation qui favorise l'avance de l'appareil, selon une des revendications 1 à 4, ainsi qu'un rouleau compacteur et émotteur (20) qui travaille derrière ce rotor et qui s'enfonce dans le sol par des rangées de dents (21) disposées dans des plans radiaux du rouleau (20), et un dispositif débiteur de semences, qui possède des tubes de sortie des semences (31) disposés en avant du rouleau compacteur et émotteur (20), caractérisé en ce que chacun des tubes de sortie des semences (31) est disposé ou peut être amené dans une position qui débouche dans l'intervalle entre deux rangées de dents adjacentes (21) et le rouleau compacteur et émotteur (20) est disposé ou peut être amené dans une position située juste derrière le rotor à dents (10) pour former une surface d'arrêt dans le flux de terre qui est projeté par le rotor à dents (10) pendant le travail du sol.

6. Appareil de travail du sol selon la revendication 5, caractérisé en ce que les embouts des tubes de sortie des semences (31) qui mènent aux orifices de sortie (32) de ces tubes sont orientés ou peuvent être orientés à peu près tangentiellement à l'axe du rouleau et/ou en ce que les extrémités extérieures des dents (21), considérées dans la direction axiale du rouleau (20), font saillie au-delà des orifices de sortie (32) ou des embouts des tubes de sortie des semences (31), dans une direction radiale en référence à l'axe du rouleau.

7. Appareil de travail du sol selon une des revendications 5 et 6, caractérisé en ce que les orifices de sortie (32) des tubes de sortie des semences (31) peuvent être amenés à peu près à la hauteur du rotor à dents (10), ou juste au-dessus de l'horizon de travail (H), considéré dans une vue de côté de l'appareil.

8. Appareil de travail selon une des revendications 5 à 7, caractérisé en ce qu'en supplément ou en remplacement des tubes de sortie des semences (31), d'autres tubes de sortie des semences ou socs de semoirs (80), de préférence combinés à des brosses élastiques, sont disposés en amont du rouleau émotteur (20), derrière ces tubes (31), les tubes de sortie de semences additionnels ou les socs de semoirs (80) étant disposés de façon à pouvoir être relevés au-dessus du rouleau émotteur (20), par rotation autour d'un axe transversal, et pouvant être basculés vers le haut, d'une position de travail abaissée à une position de transport, en raccourcissant ainsi la longueur totale de l'appareil de travail du sol.

9. Appareil de travail du sol selon la revendication 8, caractérisé en ce que les socs de semoirs (80) sont fixés, au-dessus du rouleau émotteur (20), au moyen de leurs tubes d'amenée (82) qui servent à amener la semence, à une poutre transversale ou à un arbre transversal qu'on peut de préférence faire pivoter hydrauliquement.

## Claims

1. Agricultural ground preparation apparatus comprising a tyned rotor (10) which breaks up or ploughs up the ground and which is drivable in a direction of movement which assists the travel of the apparatus, characterized in that the tynes (11) have respective holding arms (13) which are fixedly arranged on the rotor axle or rotor hub and also tyne pieces which carry out the working of the ground which are interchangeably held in the holding arms and which respectively form with the holding arms (13) an open angle in the direction of rotation, wherein the tyne pieces (14) have a tapered portion (100), which is inserted into a sleeve-like mount (18) on the holding arm (13), and are braced at the side remote from the rotor axle or hub of their thicker region (14') which adjoins the tapered portion (100), and which has a cross-section with an edge pointing in the direction of rotation of the rotor, against a bead-like reinforced edge (110) arranged on the holding arm (13) following the sleeve-like mount (18); and in that blades (12) are arranged at the free ends of the tyne pieces (14) which, as seen in the axial view of the tyned rotor (10), form an angle with a line which passes through the free end tangential to the rotor axis in such a way that the blades (12) attempt to lift the engaged earth during rotation (U) of the rotor (cutting action).

2. Ground preparation apparatus in accordance with claim 1, characterized in that each tyne piece (14) is clampable by its step (115) formed between the tapered portion (100) and the thicker portion (14') against the confronting end face of the sleeve-like mount (18) in that a nut or bolt part (116) which is arranged at or on the free end of the tapered portion (100), which is provided with a corresponding thread, is clampable against the other end face of the mount (18).

3. Ground preparation apparatus in accordance with one of the claims 1 or 2, characterized in that the blades (12) extend in the transverse direction of the apparatus approximately parallel to the rotor axle (Figs. 8, 9).

4. Ground preparation apparatus in accordance with one of the claims 1 to 3, characterized in that the tyned rotor (10) is drivable with a sufficient speed of rotation such that it is sufficient for it to be equipped with in each case only a single tyne at relatively widely spaced radial planes of the rotor axle.

5. Ground preparation apparatus comprising a tyned rotor (10) which breaks up or ploughs up the ground and which is drivable in a direction of running which assists the travel of the apparatus, in accordance with one of the claims 1 to 4, and also a packing and tilling roller (20) which operates behind it and which has tooth rows (21) arranged in radial planes of the roller (20) which penetrate into the ground, and with a seed sowing device which has seed run-out tubes (31) arranged in front of the packing and tilling roller (20), characterized in that the seed run-out tubes (31) are each arranged or mountable so that they open into the intervening space between neighbouring tooth rows (21), and the packer and tiller roller (20) is arranged or arrangeable closely behind the tyned rotor (10) as an impact surface in the flow of earth which is generated by the tyned rotor (10) during the working of the ground.

6. Ground preparation apparatus in accordance with claim 5, characterized in that the end pieces of the seed run out tubes which lead to the run out opening (32) of the same are aligned or alignable approximately tangential to the axis of the roller, and/or the outer ends of the teeth (21) of the roller (21) as seen in axial view project in the radial direction relative to the roller axis beyond the run out openings (32) or end portions of the seed run out tubes (31).

7. Ground working apparatus in accordance with one of the claims 5 or 6, characterized in that the run out openings (32) of the seed run out tubes (31) are mountable in the side view of the apparatus approximately at the level of or closely above the working horizon (H) of the tyned rotor (10).

8. Ground preparation apparatus in accordance with one of the claims 5 to 7, characterized in that in addition to or as an alternative to the seed run-out tubes (31) in front of the tilling roller (20) further seed run out tubes or sowing shares (80) are provided behind the same, preferably combined with resilient combs, with the further seed run out tubes or sowing shares (80) being arranged so that they can be pivoted upwardly about a transverse axis above the tilling roller (20) and can be pivoted upwardly from a lowered working position into a transport position with the total length of the ground preparation apparatus being shortened.

9. Ground preparation apparatus in accordance with claim 8, characterized in that the sowing shares (80) are secured above the tilling roller (20), by means of their feed tubes (82) which serve for the supply of the seed material, to a transverse beam or to a transverse shaft which is preferably hydraulically pivotable.

FIG. 1

FIG. 2

EP 0 201 785 B1

FIG. 3

FIG. 4

EP 0 201 785 B1

FIG. 5

EP 0 201 785 B1

FIG. 7

FIG. 6

EP 0 201 785 B1

FIG. 9

FIG. 8

FIG. 10

FIG. 11

U

12

14

11

13

13

11

14

12

12

14

11

13

13

14

12